# DEMANDE DE BREVET EUROPEEN

(11) **EP 4 765 683 A1**
(43) Date de publication de la demande: **24.06.2026**
(21) Numéro de dépôt: 25224702.8
(22) Date de dépôt: 17.12.2025
(51) Int. Cl.: H04B 10/69, H04B 10/40, H04B 10/272, H04Q 11/00

(54) **INTERFACE OPTOÉLECTRONIQUE A DOUBLE PROTOCOLE**

(30) Priorité: 20.12.2024 FR 2414911
(71) Demandeur: SAGEMCOM BROADBAND SAS, 92270 Bois-Colombes (FR)
(72) Inventeur: DE BRAQUILANGES, Rodolphe, 92270 BOIS-COLOMBES (FR); JAULIN, Jean-Philippe, 92270 BOIS-COLOMBES (FR)
(74) Mandataire: Cabinet Boettcher

(57) **Abrégé**

Interface optoélectronique (2) comportant :
- un filtre passe-bande en entrée duquel sont appliqués les signaux lumineux entrants, et agencé pour produire des signaux lumineux filtrés, le filtre passe-bande étant conçu pour laisser passer toutes les longueurs d'onde de signal porteur de la pluralité de protocoles de communication prédéfinis ;
- un photorécepteur (12) ;
- une unité de traitement (6) agencée pour sélectionner un module logiciel particulier associé au protocole de communication particulier (33p), parmi une pluralité de modules logiciels différents (33a, 33b) associés chacun à l'un des protocoles de communication prédéfinis.

## Description

L'invention concerne le domaine des interfaces optoélectroniques.

### ARRIERE PLAN

On connaît des passerelles Internet qui sont munies d'une interface de communication par fibre optique destinée à être raccordée à un réseau PON (pour *Passive Optical Network).*

Les réseaux d'accès sur fibre optique de type PON sont basés sur le transport de divers flux d'informations dans une seule fibre optique. Ces différents flux d'informations sont générés et injectés depuis l'amont et/ou depuis l'aval du réseau d'accès au moyen de sources laser monochromatiques et sont différenciés par la longueur d'onde des signaux lumineux porteurs des informations du flux à transporter.

Historiquement, la technologie d'accès G-PON a été déployée dans les années 2015, offrant un débit vers l'aval (depuis le cœur de réseau vers le terminal de l'utilisateur) de 2,5 Gbps, et de 1,25 Gbps vers l'amont (depuis le terminal de l'utilisateur vers le cœur de réseau). Puis, à partir de 2020, a été rajoutée sur certains réseaux la technologie d'accès XGS-PON, offrant un débit symétrique de 10 Gbps, permettant ainsi à un opérateur de proposer différentes performances à ses abonnés.

Le réseau d'accès G-PON (pour *Gigabit capable Passive Optical Network*) défini par la recommandation ITU-T G.984.2 *("*ITU-T G.984.2 - Gigabit-capable Passive Optical Networks (G-PON): Physical Media Dependent (PMD) layer specification," International Telecommunication Union (ITU), Recommendation ITU-T G. 984.2 Ed 2.0, Sep. 2019), met en œuvre un flux vers l'aval pour lequel la longueur d'onde du signal porteur est de 1490 nm, ainsi qu'un flux vers l'amont pour lequel la longueur d'onde du signal porteur est de 1310 nm.

Le réseau d'accès XGS-PON (pour 10 Gigabits Symmetric Passive Optical Network), défini par la recommandation ITU-T G.9807.1 (ITU-T G.9807.1 (2016) Amd. 2, Edition 1.3*, "*10-Gigabit-capable symmetric passive optical network (XGS-PON) - Amendment 2." International Telecommunication Union (ITU), Oct. 29, 2020*),* met en œuvre un flux vers l'aval pour lequel la longueur d'onde du signal porteur est de 1577 nm, ainsi qu'un flux vers l'amont pour lequel la longueur d'onde du signal porteur est de 1270 nm.

Récemment, deux nouveaux réseaux d'accès ont été définis par les organismes de normalisation, et se partagent un marché naissant de réseau d'accès à très haut débit.

Le réseau d'accès 25GS-PON (pour *25 Gigabits Symmetric Passive Optical Network*) défini par la norme MSA GROUP 25GS-PON Specification (25GS-PON Specification, 3.0, "25GS-PON Specification - 25 Gigabit Symmetric Passive Optical Network." Nov. 02, 2023. [Online]. Available: www.25gspon-msa.org), met en œuvre un flux vers l'aval pour lequel la longueur d'onde du signal porteur est de 1358 nm, ainsi qu'un flux vers l'amont pour lequel la longueur d'onde du signal porteur peut prendre trois valeurs optionnelles.

Le réseau d'accès 50G-PON (pour *50 Gigabits Passive Optical Network*) défini par la norme ITU-T G.9804.3 (ITU-T G.9804.3 (2021) Amd. 2 (03/2024), Ed. 1.2, "50-Gigabit-capable passive optical networks (50GPON): Physical media dependent (PMD) layer specification Amendment 2." International Telecommunication Union (ITU), Mar. 22, 2024*),* met en œuvre un flux vers l'aval pour lequel la longueur d'onde du signal porteur est de 1342 nm, ainsi qu'un flux vers l'amont pour lequel la longueur d'onde du signal porteur peut prendre les trois même valeurs optionnelles.

Ces deux nouvelles technologies partagent des caractéristiques pour leur schéma de modulation de l'information en NRZ (pour *Non Return Zero*), ainsi que leur débit pour le flux vers l'amont à 25 Gbps (Gigabits par seconde).

La différence majeure entre ces deux réseaux d'accès porte sur le débit du flux vers l'aval : 25 Gbps pour le 25GS-PON et 50 Gbps pour le 50G-PON, ainsi que sur les longueurs d'onde des signaux porteurs de ces signaux vers l'aval.

Une caractéristique de ces deux réseaux d'accès est qu'ils sont basés sur la mise en œuvre de signaux porteurs vers l'amont partageant les mêmes longueurs d'onde optionnelles.

Les trois options de longueur d'onde pour le signal lumineux vers l'amont permettent de proposer diverses solutions de coexistence avec les technologies d'accès précédentes G-PON et XGS-PON.

La première variante, nommée UW0 pour 25GS-PON et Option 1 pour 50G-PON, met en œuvre un signal porteur vers l'amont dont la longueur d'onde est 1270 nm, ce qui permet une coexistence avec un réseau d'accès G-PON.

La seconde variante, nommée UW1 pour 25GS-PON et Option 2 pour 50G-PON, met en œuvre un signal porteur vers l'amont dont la longueur d'onde est 1300 nm, ce qui permet une coexistence avec un réseau d'accès XGS-PON.

La troisième variante, nommée UW3 pour 25GS-PON et Option 3 pour 50G-PON, met en œuvre un signal porteur vers l'amont dont la longueur d'onde est 1286 nm, ce qui permet une coexistence simultanée avec un réseau d'accès G-PON et avec un réseau d'accès XGS-PON.

L'industrie se focalise principalement sur la troisième variante qui présente la meilleure couverture de coexistence.

Les deux technologies de nouvelle génération sont basées sur des longueurs d'onde similaires pour assurer une coexistence avec les flux vers l'amont des générations précédentes, mais elles sont directement concurrentes, et elles ne sont aucunement prévues pour cohabiter sur un même réseau de distribution par fibre optique.

Le fabricant de passerelles est donc confronté à la problématique suivante.

L'interface optoélectronique de ses passerelles reliées à un réseau utilisant la technologie 25GS-PON doit être capable de recevoir des signaux lumineux définis selon le protocole de la technologie 25GS-PON, alors que l'interface optoélectronique de ses passerelles reliées à un réseau utilisant la technologie 50G-PON doit être capable de recevoir des signaux lumineux définis selon le protocole de la technologie 50G-PON.

Il semble donc très avantageux de concevoir une unique interface optoélectronique qui soit nativement fonctionnelle avec l'une ou l'autre version de la nouvelle technologie d'accès.

Il est connu, dans le cadre des interfaces pour fibre optique PON destinées à opérer avec plusieurs réseaux d'accès optiques, d'utiliser un sous ensemble optique de type QOSA (pour *Quadri-directional Optical Sub Assembly*) adapté aux deux paires de longueurs d'ondes de chaque protocole, et d'y associer deux chaînes d'amplification d'émission et de réception dont les accès au processeur sont sélectionnés en fonction d'un élément déclencheur. Mais un tel composant QOSA est complexe à réaliser et nécessite la mise en œuvre de deux chaînes complètes de communication.

### OBJET

L'invention a pour objet de réduire la complexité et le coût d'une interface optoélectronique compatible avec plusieurs protocoles de communication.

### RESUME

En vue de la réalisation de ce but, on propose une interface optoélectronique, agencée pour être connectée à une fibre optique sur laquelle peuvent cheminer des signaux lumineux entrants comprenant des signaux lumineux particuliers qui sont définis selon un unique protocole de communication particulier parmi une pluralité de protocoles de communication prédéfinis utilisant chacun une longueur d'onde de signal porteur différente, l'interface optoélectronique comportant :
- un filtre passe-bande en entrée duquel sont appliqués les signaux lumineux entrants, et agencé pour produire des signaux lumineux filtrés, le filtre passe-bande étant conçu pour laisser passer toutes les longueurs d'onde de signal porteur de la pluralité de protocoles de communication prédéfinis ;
- un photorécepteur agencé pour produire des signaux électriques entrants à partir des signaux lumineux filtrés ;
- une unité de traitement agencée pour acquérir les signaux électriques entrants, sélectionner un module logiciel particulier associé au protocole de communication particulier, parmi une pluralité de modules logiciels différents associés chacun à l'un des protocoles de communication prédéfinis, et interpréter les signaux électriques entrants en utilisant ledit module logiciel particulier.

Le filtre passe-bande est donc conçu pour laisser passer les signaux lumineux particuliers associés à tous les protocoles de communication prédéfinis. L'unité de traitement acquiert alors les signaux électriques entrants qui sont produits à partir des signaux lumineux particuliers, et sélectionne le module logiciel particulier associé au protocole de communication particulier effectivement présent sur le réseau. L'interface optoélectronique est donc compatible avec tous les protocoles de communication prédéfinis de sorte que l'équipement (une passerelle par exemple) peut être connecté à tout réseau sur lequel est utilisé l'un quelconque de ces protocoles de communication prédéfinis, alors même que ledit protocole utilisé n'est pas connu au moment de la conception et de la fabrication de la passerelle. L'interface optoélectronique nécessite une unique chaîne de réception, ce qui permet de simplifier l'interface optoélectronique et de réduire ses coûts de conception et de fabrication.

On propose de plus une interface optoélectronique telle que précédemment décrite, dans laquelle, pour sélectionner le module logiciel particulier, l'unité de traitement est agencée pour :
- au démarrage de l'interface optoélectronique, utiliser un module logiciel initial parmi la pluralité de modules logiciels différents ;
- tenter d'interpréter les signaux électriques entrants avec le module logiciel initial ;
- en cas d'échec, tenter d'interpréter les signaux électriques entrants avec un autre module logiciel ;
- réitérer ces étapes jusqu'à parvenir à interpréter les signaux électriques entrants avec un module logiciel adapté, le module logiciel particulier étant ledit module logiciel adapté.

On propose de plus une interface optoélectronique telle que précédemment décrite, dans laquelle l'unité de traitement comprend un module de détection agencé pour analyser des signaux cibles issus des signaux électriques entrants et pour produire un signal de détection représentatif du protocole de communication particulier des signaux lumineux particuliers,
l'unité de traitement étant agencée pour sélectionner le module logiciel particulier en fonction du signal de détection.

On propose de plus une interface optoélectronique telle que précédemment décrite, comprenant en outre un composant de traitement de réception relié à une sortie du photorécepteur et agencé pour produire un signal de présence ayant une valeur prédéfinie lorsqu'un niveau des signaux lumineux filtrés reçus par le photorécepteur est supérieur à un seuil prédéfini, et dans laquelle l'unité de traitement est agencée pour sélectionner le module logiciel particulier en fonction d'une combinaison du signal de détection et du signal de présence.

On propose de plus une interface optoélectronique telle que précédemment décrite, dans laquelle le module de détection comprend au moins un détecteur agencé pour détecter un niveau d'énergie d'au moins une fréquence électrique prédéfinie, chaque fréquence électrique prédéfinie étant associée à l'un des protocoles de communication prédéfinis.

On propose de plus une interface optoélectronique telle que précédemment décrite, dans laquelle le module de détection est agencé pour réaliser une opération de corrélation entre les signaux cibles, et un ou des signaux de référence associés chacun à l'un des protocoles de communication prédéfinis.

On propose de plus une interface optoélectronique telle que précédemment décrite, dans laquelle une courbe de réponse du filtre passe-bande comprend, pour chaque longueur d'onde de signal porteur associée à un protocole de communication prédéfini, un maximum local couvrant ladite longueur d'onde de signal porteur.

On propose de plus une interface optoélectronique telle que précédemment décrite, dans laquelle la courbe de réponse comprend, entre deux maximums locaux successifs, une portion sensiblement constante ayant une amplitude sensiblement égale à celle des maximums locaux.

On propose de plus une interface optoélectronique telle que précédemment décrite, comprenant de plus une source lumineuse agencée pour émettre sur la fibre optique des signaux lumineux sortants, un élément de couplage et une lame séparatrice positionnés entre, d'une part, la fibre optique, et d'autre part, la source lumineuse et le photorécepteur,
la source lumineuse, le photorécepteur, l'élément de couplage, la lame séparatrice et le filtre passe-bande étant intégrés dans un même composant optoélectronique.

On propose de plus une interface optoélectronique telle que précédemment décrite, comprenant de plus une source lumineuse agencée pour émettre sur la fibre optique des signaux lumineux sortants, un élément de couplage et une lame séparatrice positionnés entre, d'une part, la fibre optique, et d'autre part, la source lumineuse et le photorécepteur,
la source lumineuse, le photorécepteur, l'élément de couplage, la lame séparatrice étant intégrés dans un même composant optoélectronique,
l'interface optoélectronique comprenant de plus un réseau de Bragg formant le filtre passe-bande et un isolateur, le réseau de Bragg et l'isolateur étant situés à l'extérieur et en amont dudit composant optoélectronique.

On propose de plus un équipement intégrant une interface optoélectronique telle que précédemment décrite.

On propose de plus un équipement tel que précédemment décrit, l'équipement étant une passerelle Internet agencée pour être reliée à un réseau PON.

On propose de plus un procédé de configuration, mis en œuvre dans une unité de traitement d'une interface optoélectronique telle que précédemment décrite, et comprenant les étapes d'acquérir les signaux électriques entrants, de sélectionner un module logiciel particulier associé au protocole de communication particulier, parmi une pluralité de modules logiciels différents associés chacun à l'un des protocoles de communication prédéfinis, et d'interpréter les signaux électriques entrants en utilisant ledit module logiciel particulier.

On propose de plus un programme d'ordinateur comprenant des instructions qui conduisent l'unité de traitement de l'interface optoélectronique telle que précédemment décrite à exécuter les étapes du procédé de configuration tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en œuvre particuliers non limitatifs de l'invention.

### BREVE DESCRIPTION DES DESSINS

Il sera fait référence aux dessins annexés parmi lesquels :
[Fig. 1] la figure 1 représente une passerelle comprenant une interface optoélectronique selon un premier mode de réalisation ;
[Fig. 2] la figure 2 représente un sous-ensemble optoélectronique ;
[Fig. 3] la figure 3 représente une courbe de réponse d'un filtre passe-bande selon un premier mode de réalisation ;
[Fig. 4] la figure 4 représente une courbe de réponse d'un filtre passe-bande selon un deuxième mode de réalisation ;
[Fig. 5] la figure 5 représente une passerelle comprenant une interface optoélectronique selon un deuxième mode de réalisation ;
[Fig. 6] la figure 6 représente des étapes d'un procédé de configuration mis en œuvre dans la passerelle.

### DESCRIPTION DETAILLEE

Dans la description qui va suivre, des éléments identiques, similaires ou analogues seront désignés par les mêmes chiffres de référence.

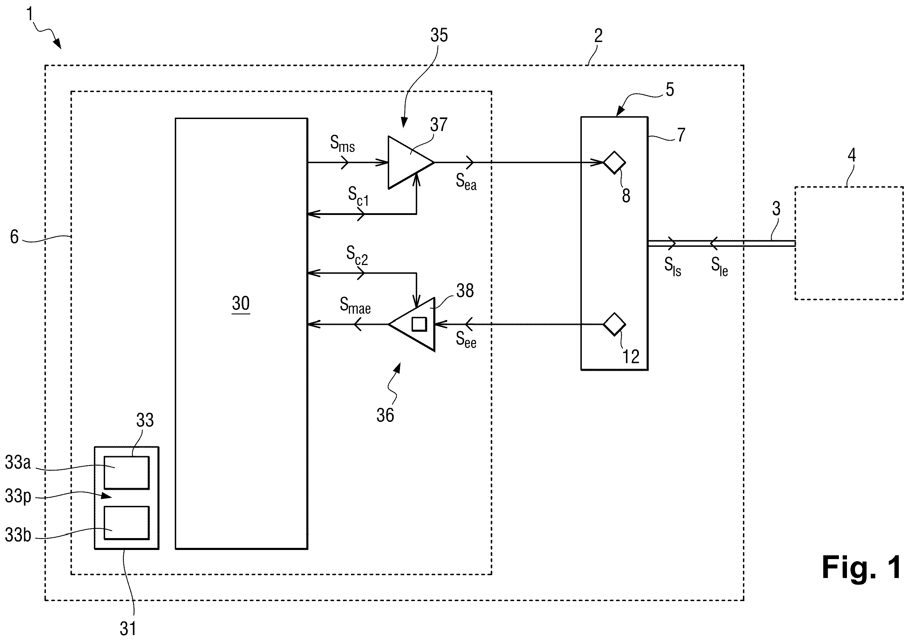

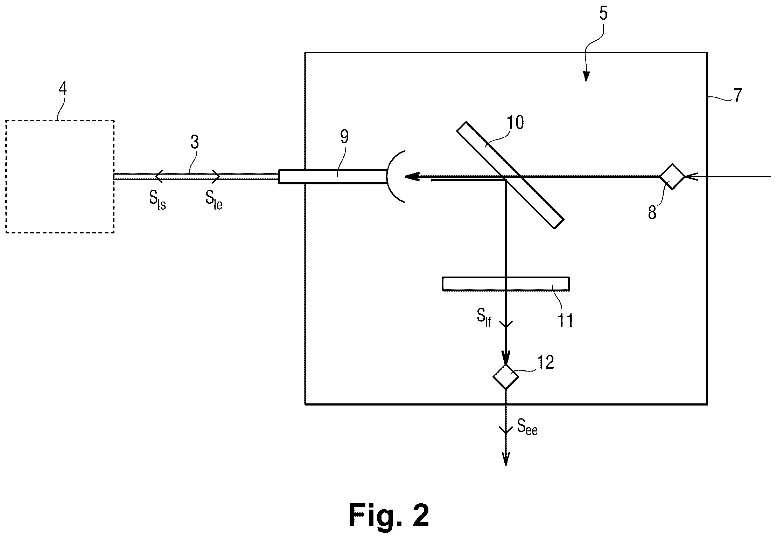

En référence aux figures 1 et 2, la passerelle Internet 1 comprend une interface optoélectronique 2 selon un premier mode de réalisation. Cette interface optoélectronique 2 est connectée à une fibre optique 3 d'un réseau PON 4.

L'interface optoélectronique 2 permet à la passerelle 1 de transmettre au réseau des signaux lumineux sortants Sₗₛ (communication « d'aval en amont ») et de recevoir du réseau 4 des signaux lumineux entrants Sₗₑ (communication « d'amont en aval »).

Les signaux lumineux entrants Sₗₑ, provenant du réseau 4 et cheminant sur la fibre optique 3, comprennent des signaux lumineux particuliers Sₗₚ qui sont définis respectivement selon un unique protocole de communication particulier parmi une pluralité de protocoles de communication prédéfinis. Les signaux lumineux entrants Sₗₑ peuvent donc comprendre :
- soit uniquement les signaux lumineux particuliers Sₗₚ,
- soit les signaux lumineux particuliers Sₗₚ ainsi que d'autres signaux lumineux qui ne sont pas définis selon l'un des protocoles de communication prédéfinis.

Ici, la pluralité de protocoles de communication prédéfinis comprend deux protocoles possibles : celui associé à la technologie de réseau d'accès 25GS-PON et celui associé à la technologie de réseau d'accès 50G-PON.

La conception de la passerelle 1 lui permet de coopérer avec un unique et quelconque protocole parmi ces deux protocoles qui, on le rappelle, sont concurrents : seul l'un de ces deux protocoles est présent sur le réseau 4. Le protocole de communication particulier, effectivement présent sur la fibre optique 3, n'est pas connu au moment de la conception et de la fabrication de la passerelle 1.

L'interface optoélectronique 2 comporte un sous-ensemble optoélectronique 5 et une unité de traitement 6.

Le sous-ensemble optoélectronique 5 est bidirectionnel et est ici intégré dans un unique composant optoélectronique 7 de type BOSA (pour *Bidirectional Optical Sub Assembly*).

Le sous-ensemble optoélectronique 5 comporte un dispositif d'émission comprenant une source lumineuse 8, un élément de couplage 9, une lame séparatrice 10, un filtre passe-bande 11 et un dispositif de réception comprenant un photorécepteur 12.

L'élément de couplage 9 et la lame séparatrice 10 sont positionnés entre, d'une part, la fibre optique 3 (côté amont), et d'autre part, la source lumineuse 8 et le photorécepteur 12 (côté aval).

La source lumineuse 8 est ici par exemple une source « laser », et par exemple une diode laser. La diode laser 8 émet les signaux lumineux sortants Sₗₛ, sous forme de signaux optiques monochromatiques, en direction de la fibre optique 3. Les signaux lumineux sortants Sₗₛ sont émis par la diode laser 8 sur la fibre optique 3 via la lame séparatrice 10 et l'élément de couplage 9.

L'élément de couplage 9 est :
- adapté à la transmission des signaux lumineux sortants Sₗₛ reçus de la diode laser 8 dans un espace de propagation aérien vers le cœur de la fibre optique 3 pour qu'ils soient dirigés vers l'amont du réseau optique 4 ;
- et adapté à la transmission vers un espace de propagation aérien des signaux lumineux entrants Sₗₑ issus du cœur de la fibre optique 3 en provenance de l'amont du réseau optique 4.

La lame séparatrice 10 est orientée de telle manière que sa face réfléchissante puisse diriger les signaux lumineux entrants Sₗₑ reçus depuis l'élément de couplage 9 vers la surface sensible du photorécepteur 12 et que sa face absorbante puisse laisser passer les signaux lumineux sortants Sₗₛ générés par la diode laser 8 vers l'élément de couplage 9.

Les signaux lumineux entrants Sₗₑ sont appliqués en entrée du filtre passe-bande 11 via l'élément de couplage 9 et la lame séparatrice 10.

Le filtre passe-bande 11 produit des signaux lumineux filtrés S_{lf} à partir des signaux lumineux entrants Sₗₑ.

Le photorécepteur 12 du dispositif de réception comprend une photodiode. La photodiode 12 reçoit les signaux lumineux filtrés S_{lf} et génère des signaux électriques entrants Sₑₑ, images des signaux lumineux filtrés S_{lf} qu'elle reçoit.

Une photodiode étant par nature quasi agnostique à l'énergie des photons qui la frappent, et donc à la longueur d'onde du signal lumineux reçu depuis l'amont du réseau optique, il est d'usage d'intercaler dans le chemin optique de réception un filtre tel le filtre 11. Cette précaution permet de sélectionner un signal optique parmi une pluralité de signaux potentiellement présents sur le réseau optique.

Le composant BOSA utilisé est par exemple le BOSA modèle PB630005 du fournisseur POTRON (marque déposée), qui permet d'interfacer un réseau d'accès de type 50G-PON. Ce composant est constitué :
- d'une source laser adaptée à l'émission à un débit de 25 Gbps d'un signal lumineux monochromatique dont la longueur d'onde est 1286 nm correspondant à l'option 3 de la technologie 50G-PON et à l'option UW3 de 25GS-PON ;
- d'un photorécepteur adapté à la réception à un débit maximal de 50 Gbps d'un signal lumineux dans les bandes O et E des signaux infrarouges (1260 - 1460 nm) ;
- d'un filtre passe-bande de réception dont la fenêtre passante couvre la plage de longueurs d'onde 1330 - 1356 nm définis par la recommandation ITU-T G.9804.3 au chapitre 10.1.

Ici, cependant, comme on l'a compris, la passerelle 1 est susceptible de recevoir des signaux lumineux particuliers Sₗₚ qui sont définis selon un unique protocole de communication particulier (non connu a priori) parmi une pluralité de protocoles de communication prédéfinis utilisant chacun une longueur d'onde de signal porteur différente.

Les signaux lumineux entrants Sₗₑ, comprenant les signaux lumineux particuliers Sₗₚ, sont donc appliqués en entrée du filtre passe-bande 11.

Ici, le composant BOSA d'origine a été modifié. Le filtre passe-bande 11 a été modifié et est désormais adapté pour laisser passer toutes les longueurs d'onde de signal porteur de la pluralité de protocoles de communication prédéfinis. Ici, le filtre passe-bande 11 est donc conçu pour laisser passer les longueurs d'ondes 1342 nm et 1358 nm.

On a donc eu l'idée d'adapter le composant BOSA d'origine pour opérer également avec la technologie 25GS-PON en modifiant la fenêtre du filtre 11 pour lui permettre de laisser passer également les signaux lumineux vers l'aval de la technologie 25GS-PON dont la longueur d'onde est de 1258 nm comme il est défini dans la norme *MSA GROUP 25GS-PON Specification* dans la figure B.1.

Cet ajustement peut être réalisé en utilisant une méthode connue de l'homme du métier dans le domaine du filtrage optique, qui consiste à ajuster la composition et la structure des couches minces déposées à la surface de la lame de verre composant le filtre passe-bande 11.

Avantageusement, la fenêtre passante du filtre 11 devra couvrir la plage de longueurs d'onde 1330 - 1380 nm pour que la photodiode 12 soit sensible aux signaux optiques reçus de l'amont pour les deux technologies.

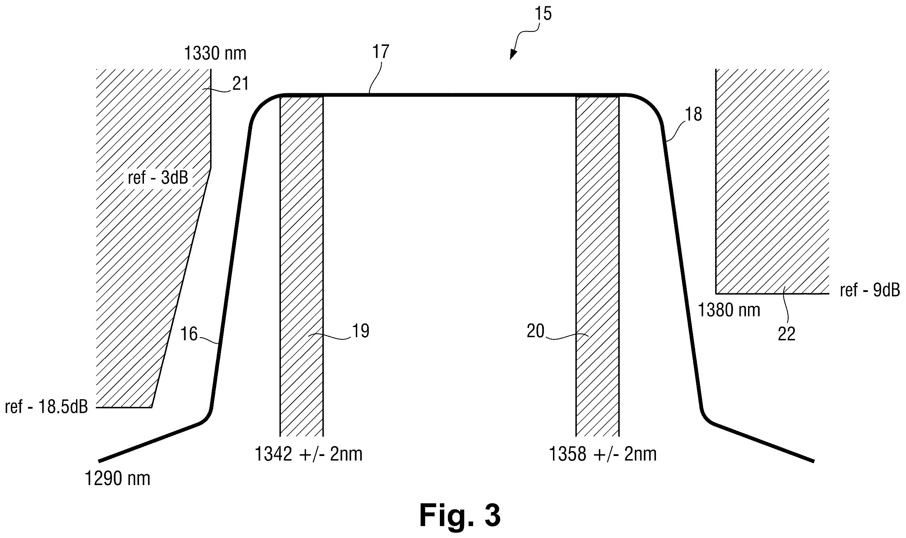

En référence à la figure 3, la courbe de réponse 25 du filtre passe-bande 11 comprend, pour chaque longueur d'onde de signal porteur associée à un protocole de communication prédéfini, un maximum local 26a, 26b couvrant ladite longueur d'onde de signal porteur.

La courbe de réponse 25 du filtre passe-bande 11 comprend donc un premier maximum local 26a couvrant la bande 1342 +/- 2nm et un deuxième maximum local 26b couvrant la bande 1358 +/- 2nm.

Ce filtre passe-bande permet d'assurer la compatibilité en réception avec les signaux optiques dans le sens aval des technologies 25GS-PON et 50G-PON.

Le gabarit 19 montre une première fenêtre couvrant la bande du signal vers l'aval de la technologie 50G-PON pour laquelle le filtre doit montrer une atténuation minimale de référence. Cette atténuation, correspondant à la portion sensiblement constante, est idéalement égale quelques dixièmes de dB.

Le gabarit 20 montre une seconde fenêtre couvrant la bande du signal vers l'aval de la technologie 25GS-PON pour laquelle le filtre doit également montrer une atténuation minimale de référence.

La portion sensiblement constante 17 de la courbe de réponse couvre donc toutes les longueurs d'onde de signal porteur de tous les protocoles de communication prédéfinis : ici la bande 1342 +/- 2nm et la bande 1358 +/- 2nm.

Le gabarit 21 montre la frontière minimale en longueur d'onde et en atténuation que le filtre 11 doit appliquer au signal qui le traverse pour la partie basse du spectre. Cette frontière correspond ici à la frontière inférieure montrée par la recommandation ITU-T G.9804.3 au chapitre 10.1.

Le gabarit 22 montre la frontière minimale en longueur d'onde et en atténuation que le filtre 11 doit appliquer au signal qui le traverse pour la partie haute du spectre. Cette frontière correspond ici à la frontière supérieure montrée dans la norme MSA GROUP 25GS-PON *Specification* dans la figure B.1.

La courbe de réponse 25 du filtre est conforme à la définition des gabarits 19, 20, 21 et 22.

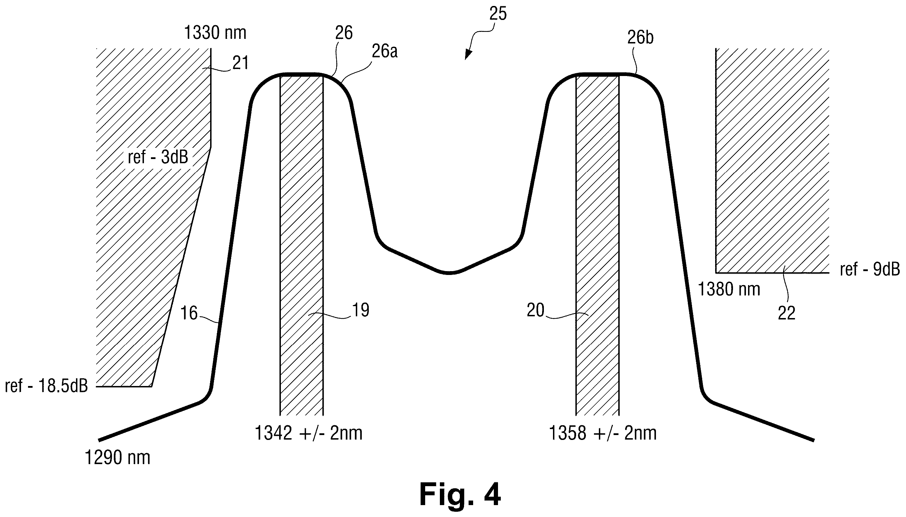

En référence à la figure 4, la courbe de réponse 15 du filtre 11 selon un deuxième mode de réalisation comprend, entre deux maximums locaux successifs, une portion sensiblement constante 17 ayant une amplitude sensiblement égale à celle des maximums locaux.

La courbe de réponse 15 comprend donc une portion croissante 16, suivie de la portion sensiblement constante 17, suivie d'une portion décroissante 18.

La courbe de réponse 15 du filtre 11 est à nouveau conforme à la définition des gabarits 19, 20, 21 et 22.

Ce principe de filtrage de type passe-bande décrit ici dans le cadre des protocoles 25GS-PON et 50G-PON est transposable pour tout autre paire ou ensemble de protocoles pour lesquels il serait avantageux de mutualiser le photorécepteur. Dans ce cas, il est nécessaire de définir la ou les fenêtres pour permettre le passage des signaux lumineux vers l'aval correspondant à chacun des protocoles, tout en bloquant les signaux indésirables.

Ici, comme on l'a vu, la source lumineuse 8, le photorécepteur 12, l'élément de couplage 9, la lame séparatrice 10 et le filtre passe-bande 11 sont intégrés dans un même composant optoélectronique 7. Cette configuration n'est pas obligatoire.

Le filtre passe-bande 11 pourrait par exemple être déporté à l'extérieur du composant optoélectronique 7, qui intègre alors uniquement la source lumineuse 8, le photorécepteur 12, l'élément de couplage 9 et la lame séparatrice 10.

Le filtre passe-bande 11 est alors positionné en amont du composant optoélectronique 7, en série sur la fibre optique 3.

Cette configuration complexifie l'implémentation en nécessitant un composant supplémentaire. En effet, le filtre tel qu'il est placé devant le photorécepteur sur la figure 2, permet de bloquer naturellement les photons transmis par la diode laser 8 et qui seraient reflétés par un élément du réseau d'accès. Cette fonction de blocage est très importante pour éviter de perturber la photodiode 12 sensible à un très large spectre.

S'il devait être placé à l'extérieur du composant 7, le filtre passe-bande 11 devrait également laisser passer vers l'amont les signaux lumineux sortants Sₗₛ produits par la diode laser 8 tout en bloquant ses réflexions éventuelles depuis l'amont.

Le filtre passe-bande 11, dans cette configuration, comprend par exemple un réseau de Bragg. L'interface optoélectronique 2 comprend de plus un isolateur optique pour bloquer des signaux parasites résultant de réflexions des signaux lumineux sortants. Le réseau de Bragg et l'isolateur sont situés à l'extérieur et en amont du composant optoélectronique 7.

L'unité de traitement 6 (électronique et logicielle), quant à elle, comprend au moins un composant de traitement 30, qui est par exemple un processeur « généraliste », un processeur spécialisé dans le traitement du signal (ou DSP, pour *Digital Signal Processor*), un processeur spécialisé pour les algorithmes d'intelligence artificielle (de type NPU, pour *Neural Processing Unit*), un microcontrôleur, ou bien un circuit logique programmable tel qu'un FPGA (pour *Field Programmable Gate Arrays*) ou un ASIC (pour *Application Specific Integrated Circuit*)*.*

Le composant de traitement 30 est ici un processeur appelé « processeur principal ».

L'unité de traitement 6 comprend aussi une ou des mémoires 31, reliées à ou intégrées dans le composant de traitement 30. Au moins l'une de ces mémoires 31 forme un support d'enregistrement lisible par ordinateur, sur lequel est enregistré au moins un programme d'ordinateur comprenant des instructions qui conduisent le composant de traitement 30 à exécuter au moins certaines des étapes du procédé de configuration qui va être décrit.

Le processeur principal 30 a la charge de la génération et du décodage des signaux électriques mis en œuvre dans l'interface optoélectronique 2. Il a également la charge de l'exécution du logiciel nécessaire à la mise en œuvre de cette interface, et, notamment, il a la charge de l'aspect protocolaire selon la technologie de réseau d'accès sélectionnée.

Plusieurs modules logiciels différents 33, chacun en charge d'un protocole de communication prédéfini distinct, sont stockés dans la mémoire 31 et sont susceptibles d'être exécutés par le processeur principal 30. Chaque module logiciel 33 est donc associé à un unique protocole de communication prédéfini distinct, et est capable d'interpréter (uniquement) les signaux électriques entrants Sₑₑ issus des signaux lumineux particuliers Sₗₚ définis selon ledit protocole de communication prédéfini distinct.

Il y a donc par conséquent ici au moins deux modules logiciels stockés dans la mémoire 31 : un module logiciel 33a associé au protocole de la technologie 25GS-PON et un module logiciel 33b associé au protocole de la technologie 50G-PON.

L'unité de traitement 6 comprend de plus une (unique) chaîne d'émission 35 et une (unique) chaîne de réception 36.

La chaîne d'émission 35 comprend un composant pilote de laser 37 (*driver*), qui comprend un amplificateur réglable et qui est connecté à la diode laser 8. Le composant pilote de laser 37 est situé ici à l'extérieur du composant optoélectronique 5.

Ainsi, dans le sens d'aval en amont, le module logiciel en charge de la mise en œuvre de l'interface avec le réseau d'accès définit un ensemble de signaux numériques sortants Sₙₛ qui sont générés par une interface électrique spécifique du processeur 30 pour être convertis en signaux lumineux sortants Sₗₛ afin d'être acheminés vers l'amont du réseau d'accès. Ces signaux numériques sortants Sₙₛ sont mis en forme par le composant pilote de laser 37 qui est piloté par le processeur 30 via des signaux de commande S_{c1}. Les signaux électriques analogiques Sₑₐ mis en forme par le composant pilote de laser 37 sont injectés dans la diode laser 8 intégrée dans le composant optoélectronique 7 (BOSA), pour être convertis de manière à produire les signaux lumineux sortants Sₗₛ qui sont transmis vers l'amont au travers de la fibre optique 3.

Dans le sens d'amont en aval, les signaux électriques entrants Sₑₑ, images des signaux lumineux particuliers Sₗₚ reçus de l'amont, sont générés par la photodiode 12 intégrée dans le composant optoélectronique 7. Ces signaux électriques entrants Sₑₑ, qui sont des signaux électriques analogiques, sont convertis en un ensemble de signaux numériques entrants Sₙₑ par un composant de traitement de réception 38 de la chaîne de réception 36, qui est relié à une sortie de la photodiode 12. Le composant de traitement de réception 38 comporte un amplificateur de mise en forme ajustable piloté par le processeur 30 via des signaux de commande S_{c2}. Les signaux numériques entrants Sₙₑ mis en forme par le composant de traitement de réception 38 sont injectés dans une interface électrique spécifique du processeur principal 30 pour y être traités et interprétés par le module logiciel.

Le modèle MALD-37035B de la société MACOM (marque déposée) est un exemple de composant piloter de laser.

Le modèle MATP-056026 de la société MACOM est un exemple de composant de traitement de réception.

Le modèle BCM55050 de la société BROADCOM (marque déposée) est un exemple de composant processeur principal.

Dans une variante d'implémentation, il est envisageable de regrouper le pilote laser et le traitement de réception dans un composant unique, par exemple le modèle GN27L90 de la société SEMTECH (marque déposée).

Il est également envisageable d'intégrer le composant de traitement de réception et/ou le composant pilote de laser dans le processeur.

L'interface optoélectronique 2 comprend donc une unique chaîne d'émission 35 et une unique chaîne de réception 36.

Comme on l'a vu, le filtre passe-bande 11 laisse passer toutes les longueurs d'onde de signal porteur de la pluralité de protocoles de communication prédéfinis, c'est-à-dire ici les longueurs d'onde du protocole de la technologie 25GS-PON et du protocole de la technologie 50G-PON.

L'interface optoélectronique 2 permet donc un fonctionnement de la passerelle 1 selon l'une ou l'autre technologie de réseau d'accès.

Comme on l'a vu, l'une des technologies est présente sur le réseau 4, et cette technologie n'est pas connue a priori par la passerelle 1, qui est conçue pour pouvoir fonctionner avec les deux technologies. Cependant, pour fonctionner correctement, la passerelle 1 doit utiliser un module logiciel 33 en charge du protocole, qui est adapté au protocole de communication particulier des signaux lumineux particuliers Sₗₚ.

Ce module logiciel est implémenté par le composant de traitement 30 et il permet notamment d'interpréter les signaux électriques entrants Sₑₑ.

L'unité de traitement 6 est agencée pour acquérir les signaux électriques entrants Sₑₑ, sélectionner un module logiciel particulier 33p associé au protocole de communication particulier, parmi la pluralité de modules logiciels différents 33, et interpréter les signaux électriques entrants Sₑₑ en utilisant ledit module logiciel particulier 33p.

Dans un premier mode de réalisation, pour sélectionner le module logiciel particulier 33p, l'unité de traitement 6 est agencée pour :
- au démarrage de la passerelle 1 et donc de l'interface optoélectronique 2, utiliser un module logiciel initial (qui est par exemple le module logiciel 33a) ;
- tenter d'interpréter les signaux électriques entrants Sₑₑ avec le module logiciel initial ;
- en cas d'échec, tenter d'interpréter les signaux électriques entrants Sₑₑ avec un autre module logiciel (ici le module logiciel 33b) ;
- réitérer ces étapes jusqu'à parvenir à interpréter les signaux électriques avec un module logiciel adapté, le module logiciel particulier 33p étant ledit module logiciel adapté.

Dans ce mode de réalisation, la configuration logicielle est donc prédéfinie pour être exécutée automatiquement lors du démarrage de la passerelle 1. Elle peut également être engagée par une action de configuration ultérieure suivie d'un redémarrage de la passerelle 1.

Par défaut, lors de la fabrication de la passerelle 1, le module logiciel initial en charge du protocole est par exemple associé au protocole de la technologie 25GS-PON (module 33a).

Dès que l'unité de traitement 6 reçoit les signaux électriques entrants Sₑₑ, provenant de signaux lumineux particuliers Sₗₚ, elle tente donc de les interpréter avec ce module logiciel.

En cas de succès, le module logiciel associé au protocole de la technologie 25GS-PON est conservé et donc sélectionné. Les signaux électriques entrants sont interprétés en utilisant ce module logiciel particulier.

En cas d'échec, le module logiciel associé au protocole de la technologie 50G-PON est sélectionné (module logiciel 33b), puis chargé et exécuté.

Bien sûr, le module logiciel initial en charge du protocole pourrait être celui associé au protocole de la technologie 50G-PON.

Cependant, cette opération nécessite un redémarrage de la passerelle 1, ce qui est contraignant.

Il est également envisageable de positionner la gestion du module logiciel 33 en charge du protocole en position d'attente lors du démarrage de la passerelle 1, puis de lancer une version particulière en fonction d'une action ultérieure. Cette alternative permet avantageusement d'éviter un redémarrage de l'ensemble de la passerelle 1 lié à une sélection initiale incompatible avec la technologie du réseau d'accès 4 raccordé à l'interface 2.

Pour tirer parti de cette alternative, il convient de détecter la présence de l'une ou l'autre technologie de réseau d'accès sur la fibre 3 dès lors que cette dernière est raccordée à l'interface optoélectronique 2.

La photodiode 12 étant sensible indistinctement aux signaux lumineux particuliers Sₗₚ provenant de l'un ou l'autre type de réseau d'accès, il convient d'exploiter d'autres signaux pour assurer la distinction et donc détecter la présence de l'un ou de l'autre protocole.

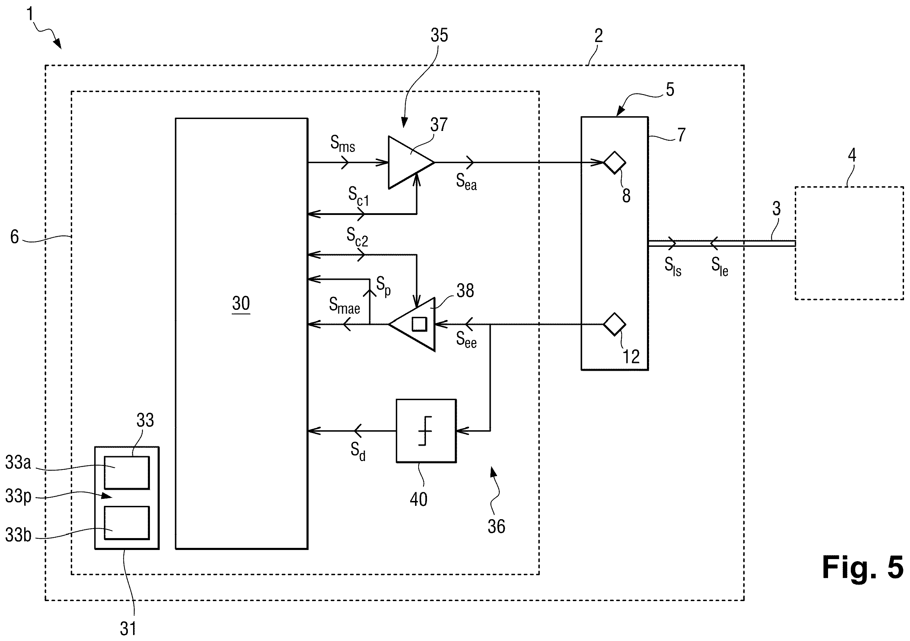

Dans un deuxième mode de réalisation, en référence à la figure 5, l'unité de traitement 6 comprend un module de détection 40 agencé pour analyser des signaux cibles issus des signaux électriques entrants Sₑₑ et pour produire un signal de détection S_{d} représentatif du protocole de communication particulier des signaux lumineux particuliers Sₗₚ, l'unité de traitement 6 étant agencée pour sélectionner le module logiciel particulier 33p en fonction du signal de détection S_{d}.

Les signaux cibles sont par exemple les signaux électriques entrants Sₑₑ eux-mêmes, ou bien les signaux numériques entrants Sₙₑ. Ici, en l'occurrence, le module de détection 40 est connecté à la photodiode 12 et les signaux cibles sont les signaux électriques entrants Sₑₑ.

Ici, par « analyser les signaux cibles », on entend :
- acquérir les signaux cibles;
- extraire au moins une caractéristique prédéfinie des signaux cibles, qui est représentative du protocole de communication particulier des signaux lumineux particuliers Sₗₚ dont sont issus les signaux cibles.

L' « analyse » peut donc être réalisée sur des signaux électriques entrants analogiques ou numériques.

Ici, par ailleurs, le composant de traitement de réception 38 est agencé pour produire un signal de présence Sₚ ayant une valeur prédéfinie lorsqu'un niveau des signaux lumineux filtrés S_{lf} reçus par la photodiode 12 est supérieur à un premier seuil prédéfini. Le premier seuil prédéfini est par exemple égal à -30dBm. Le signal de présence Sₚ permet donc de détecter la présence de signaux lumineux particuliers Sₗₚ, dont la longueur d'onde de signal porteur est incluse dans la bande passante du filtre passe-bande 11.

Dans un mode de réalisation, l'unité de traitement 6 est agencée pour sélectionner le module logiciel particulier 33p en fonction d'une combinaison du signal de détection S_{d} et du signal de présence Sₚ.

Le signal de présence Sₚ est ici par exemple le signal protocolaire LOS(pour *Loss Of Signal*). En effet, un premier niveau d'information directement exploitable existe sous la forme du signal protocolaire LOS produit par le composant de traitement de réception. Ce signal numérique LOS est positionné dans un état actif dès lors qu'aucun signal optique n'est reçu avec un niveau prédéfini et suffisant par la photodiode 12, et donc dès lors qu'un niveau des signaux lumineux filtrés S_{lf} reçus par la photodiode 12 est inférieur à un deuxième seuil prédéfini. Le deuxième seuil prédéfini est par exemple égal à -35dBm.

Ce même premier niveau d'information directement exploitable existe également sous la forme du signal protocolaire RX_SD (pour *Reception Signal Detect*) produit par le composant de traitement de réception 38. Ce signal numérique RX_SD est positionné dans un état actif dès lors qu'un signal optique est reçu par la photodiode 12 avec un niveau prédéfini suffisant.

L'un ou l'autre, ou encore une combinaison des signaux LOS et/ou, RX_SD peut être utilisée pour assurer la détection par le processeur principal 30, de signaux lumineux particuliers Sₗₚ qui sont reçus par la photodiode 12 et dont la longueur d'onde correspond à la fenêtre passante du filtre passe-bande 11.

Les deux technologies de réseau d'accès se distinguent dans le sens aval par la cadence brute du signal reçu, et donc par la signature fréquentielle du signal électrique en sortie de la photodiode 12 ou en sortie du composant de traitement de réception 38, selon que l'on considère le signal analogique ou signal numérique.

La technologie 25GS-PON met en œuvre un signal vers l'aval modulé en NRZ et cadencé au rythme de 25 Giga symboles par seconde. Ce signal en sortie de la photodiode 12, converti dans le domaine électrique par la photodiode 12, ou en sortie du composant de traitement de réception 38 après remise en forme et normalisation, présente donc une signature spectrale s'étendant des basses fréquences jusqu'à 12,5 GHz pour le signal utile. Des harmoniques liés à la raideur des fronts sont également présents au-delà, mais le niveau d'énergie n'est pas significatif.

La technologie 50G-PON met en œuvre un signal vers l'aval modulé en NRZ et cadencé au rythme de 50 Giga symboles par seconde. Ce signal en sortie de la photodiode 12, converti dans le domaine électrique par la photodiode 12, ou en sortie du composant de traitement de réception 38 après remise en forme et normalisation, présente donc une signature spectrale s'étendant des basses fréquences jusqu'à 25 GHz pour le signal utile. Des harmoniques liés à la raideur des fronts sont également présents au-delà, mais le niveau d'énergie n'est pas significatif.

Dans une première alternative, le module de détection 40 comprend au moins un détecteur agencé pour détecter un niveau d'énergie d'au moins une fréquence électrique prédéfinie, chaque fréquence électrique prédéfinie étant associée à l'un des protocoles de communication prédéfinis.

Le détecteur radiofréquence 40 a ici une fréquence centrale qui est définie à 25 GHz pour une largeur de bande d'une dizaine de GHz.

Les signaux électriques entrants Sₑₑ, issus de la photodiode 12, et donc analogiques, sont appliqués en entrée du détecteur radiofréquence 40 (et donc en entrée de sa partie radiofréquence).

Le détecteur radiofréquence 40 produit un signal de détection S_{d} (numérique) qui est représentatif d'un niveau d'énergie présent dans les signaux électriques entrants Sₑₑ et lié à la présence (ou non) d'un signal cadencé au rythme de 50 Giga symboles par seconde.

La sortie numérique du module de détection 40 est reliée à une entrée numérique du processeur 30. Celui-ci peut évaluer la présence de la signature montrant la présence d'un signal vers l'aval de la technologie 50G-PON. On note que le module de détection 40 peut être intégré au composant de traitement de réception 38, au processeur 30, ou encore prendre la forme d'un module séparé (comme c'est le cas sur la figure 5) acquérant les signaux électriques entrants See en sortie de la photodiode 12 ou en sortie du composant de traitement de réception 38.

Alternativement, le module de détection est agencé pour réaliser une opération de corrélation entre les signaux cibles, et un ou des signaux de référence associés chacun à l'un des protocoles de communication prédéfinis.

La sortie numérique du module de détection est à nouveau reliée à une entrée numérique du processeur.

L'opération de corrélation peut ainsi être réalisée entre les signaux cibles (qui sont par exemple les signaux électriques entrants « réels », analogiques, ou bien les signaux numériques entrants Sₙₑ)), et un ou des signaux de référence typiques qui seraient présents au même endroit dans le cas de la réception d'un signal vers l'aval selon au moins l'une des technologies possibles.

Ici, le signal de référence correspond à la technologie 50G-PON.

A nouveau, le module de détection 40 peut être intégré au composant de traitement de réception 38, au processeur 30, ou encore prendre la forme d'un module séparé (comme c'est le cas sur la figure 5) acquérant les signaux électriques entrants See en sortie de la photodiode 12 ou en sortie du composant de traitement de réception 38.

Suite à la détection du protocole de communication particulier des signaux lumineux particuliers Sₗₚ, l'unité de traitement 6 charge et exécute le module logiciel particulier « correct » 33p, correspondant bien aux signaux lumineux particuliers Sₗₚ effectivement présents. Il n'est donc pas nécessaire de redémarrer la passerelle 1.

Il est ainsi possible, par une combinaison des informations disponibles pour le processeur 30 telles que le signal LOS présent sur les signaux issus du composant de traitement de réception 38 et des signaux issus du module de détection 40, de déterminer la présence d'un signal montrant un réseau d'accès très haut débit raccordé à l'interface optoélectronique.

Le tableau en Annexe montre un exemple d'exploitation de ces deux signaux pour déterminer la présence d'aucune, de l'une, ou de l'autre technologie de réseau d'accès sur la fibre 3 raccordée à l'interface 2.

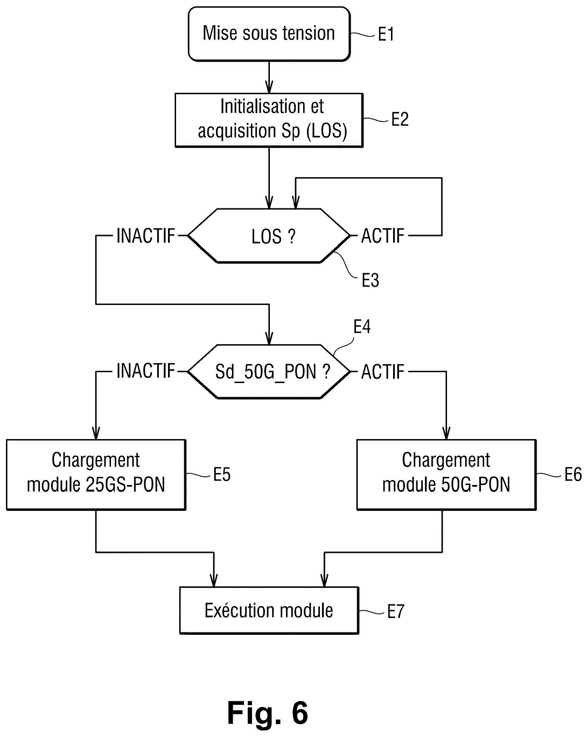

En référence à la figure 6, on décrit un mode de réalisation particulier du procédé de configuration mis en œuvre par l'unité de traitement 6 (utilisation du signal de présence Sₚ, ici signal LOS, et du module de détection 40, utilisant la technique de détection radiofréquence d'une signature de la technologie 50G-PON).

La passerelle 1 est mise sous tension : étape E1.

Le processeur 30 initialise la chaîne de réception 36 et en particulier le composant de traitement de réception 38 pour qu'il active à minima sa fonction de détection de signal LOS (Sₚ): étape E2. L'unité de traitement 6 acquiert le signal de présence Sₚ.

Le processeur 30 attend alors la désactivation du signal LOS résultant d'un niveau de signal optique vers l'aval suffisant à l'entrée de l'interface dans une bande englobant les technologies 25GS-PON et 50G-PON : étape E3. L'unité de traitement 6 acquiert les signaux électriques entrants Sₑₑ.

Dès lors que ce signal est détecté, le processeur 30 est en mesure de détecter via le signal de détection S_{d}, la présence ou l'absence de la signature d'un signal vers l'aval correspondant à la technologie 50G-PON : étape E4.

Dès lors que ce signal est inactif, alors le processeur 30 pourra charger le module logiciel 33a correspondant à la gestion protocolaire et physique d'une interface d'accès de type 25GS-PON : étape E5.

Dans le cas contraire, le processeur 30 charge le module logiciel 33b correspondant à la gestion protocolaire et physique d'une interface d'accès de type 50G-PON : étape E6.

Le processeur 30 a ainsi sélectionné et chargé le module logiciel particulier associé au protocole de communication particulier.

A l'issue du chargement du module logiciel particulier 33p correspondant à la technologie détectée, le processeur 30 pourra lancer son exécution et ainsi amorcer son mécanisme de synchronisation avec le réseau d'accès sélectionné : étape E7. Le processeur 30 interprète les signaux électriques entrants en utilisant le module logiciel particulier.

Ainsi, selon un ou plusieurs modes de réalisation, grâce à la modification de la fenêtre du filtre passe-bande et grâce à la sélection d'un module logiciel particulier associé au protocole de communication particulier, il est possible lors de la phase d'initialisation de la passerelle, de déterminer, sur la réception d'un signal vers l'aval, si la passerelle doit se configurer selon un accès 50G-PON ou selon un accès 25GS-PON. Il est ainsi proposé une solution à coût modéré pour que la passerelle puisse de manière efficace détecter quel est le type d'accès à utiliser.

On note que l'interface optoélectronique est particulièrement avantageuse dès lors que les signaux lumineux sortants utilisent une longueur d'onde identique (permettant ainsi l'usage d'une seule diode laser pour les deux protocoles).

Bien entendu, l'invention n'est pas limitée aux modes de réalisation décrits mais englobe toute variante entrant dans le champ de l'invention tel que défini par les revendications.

L'équipement dans lequel est intégrée l'interface optoélectronique n'est pas nécessairement une passerelle Internet. Il pourrait aussi s'agir d'un simple ONU (pour *Optical Network Unit*) en charge de convertir les signaux optiques et de les exploiter selon un des protocoles présents sur le réseau optique vers un protocole de plus haut niveau tel que IP (pour *Internet Protocol*) pour être exploités dans un équipement tiers qu'un routeur Internet, ou une passerelle internet. Le raccordement entre ces deux dispositifs ONU et routeur pouvant prendre la forme par exemple d'un lien Ethernet.

Le composant optoélectronique, intégrant au moins partiellement le sous-ensemble optoélectronique, n'est pas nécessairement un composant BOSA. D'autres assemblages existent, tels que par exemple le QOSA (pour *Quadridirectional Optical Sub Assembly*), ou encore le TriOSA (pour *Triple Optical Sub Assembly*). Ces composants, qui peuvent être utilisés pour réaliser au moins partiellement le sous-ensemble optoélectronique, sont dérivés de la structure principale du BOSA telle que décrite et comportent plusieurs sous-ensembles d'émission adaptés à autant de signaux lumineux monochromatiques, et/ou plusieurs sous-ensembles de réception adaptés eux aussi, grâce à différents filtres, à autant de signaux lumineux monochromatiques pouvant cohabiter dans un même réseau optique.

Le nombre de protocoles de communication prédéfinis, susceptibles d'être présents sur le réseau, pourrait être différent de deux.

L'interface optoélectronique est à même de fonctionner avec tous types de protocoles PON dès lors que les signaux lumineux entrants Sₗₑ sont susceptibles d'être dans la fenêtre du filtre passe-bande 11. Dans un ou plusieurs modes de réalisation, une pluralité de protocoles de communications prédéfinis sont susceptibles d'être présents sur la fibre optique, cette pluralité comprenant N protocoles avec N≥2. Le module de détection est configuré pour détecter un sous-ensemble de la pluralité de protocoles, ce sous-ensemble comprenant N-1 protocole(s) de la pluralité de protocoles, le module de détection étant par ailleurs configuré pour traiter le signal Sp comme une indication de la détection du protocole, dit « dernier protocole », n'appartenant pas audit sous-ensemble. Dans un exemple, le module de détection détecte le dernier protocole en interprétant le LOS comme détectant la dernière fréquence dudit dernier protocole.

Dans un ou plusieurs modes de réalisation, le filtre passe-bande 11 est modifié afin d'être passe-bande pour les fréquences de fonctionnement de la pluralité de N protocoles de communication prédéfinis. Dans un exemple les différents gabarits du filtre passe-bande 11 sont adaptés aux largeur de bandes des N protocoles prédéfinis.

### Annexe

| **Signal Sₚ** | **Signal S_{d}** | **Etat du réseau très haut débit** |
|---|---|---|
| ACTIF | INACTIF | **Absent** |
| INACTIF | INACTIF | **Réseau 25GS-PON présent** |
| INACTIF | ACTIF | **Réseau 50G-PON présent** |

## Revendications

1. Interface optoélectronique (2), agencée pour être connectée à une fibre optique (3) sur laquelle peuvent cheminer des signaux lumineux entrants (Sₗₑ) comprenant des signaux lumineux particuliers (Sₗₚ) qui sont définis selon un unique protocole de communication particulier parmi une pluralité de protocoles de communication prédéfinis utilisant chacun une longueur d'onde de signal porteur différente, l'interface optoélectronique (2) comportant :
- un filtre passe-bande (11) en entrée duquel sont appliqués les signaux lumineux entrants (Sₗₑ), et agencé pour produire des signaux lumineux filtrés (S_{lf}), le filtre passe-bande étant conçu pour laisser passer toutes les longueurs d'onde de signal porteur de la pluralité de protocoles de communication prédéfinis ;
- un photorécepteur (12) agencé pour produire des signaux électriques entrants (Sₑₑ) à partir des signaux lumineux filtrés (S_{lf}) ;
- une unité de traitement (6) agencée pour acquérir les signaux électriques entrants, sélectionner un module logiciel particulier associé au protocole de communication particulier (33p), parmi une pluralité de modules logiciels différents (33a, 33b) associés chacun à l'un des protocoles de communication prédéfinis, et interpréter les signaux électriques entrants en utilisant ledit module logiciel particulier.

2. Interface optoélectronique selon la revendication 1, dans laquelle, pour sélectionner le module logiciel particulier (33p), l'unité de traitement (6) est agencée pour :
- au démarrage de l'interface optoélectronique (2), utiliser un module logiciel initial parmi la pluralité de modules logiciels différents (33a, 33b) ;
- tenter d'interpréter les signaux électriques entrants (Sₑₑ) avec le module logiciel initial ;
- en cas d'échec, tenter d'interpréter les signaux électriques entrants avec un autre module logiciel ;
- réitérer ces étapes jusqu'à parvenir à interpréter les signaux électriques entrants avec un module logiciel adapté, le module logiciel particulier (33p) étant ledit module logiciel adapté.

3. Interface optoélectronique selon la revendication 1, dans laquelle l'unité de traitement (6) comprend un module de détection (40) agencé pour analyser des signaux cibles issus des signaux électriques entrants (Sₑₑ) et pour produire un signal de détection (S_{d}) représentatif du protocole de communication particulier des signaux lumineux particuliers, l'unité de traitement étant agencée pour sélectionner le module logiciel particulier (33p) en fonction du signal de détection.

4. Interface optoélectronique selon la revendication 3, comprenant en outre un composant de traitement de réception (38) relié à une sortie du photorécepteur (12) et agencé pour produire un signal de présence (Sₚ) ayant une valeur prédéfinie lorsqu'un niveau des signaux lumineux filtrés (S_{lf}) reçus par le photorécepteur est supérieur à un seuil prédéfini, et dans laquelle l'unité de traitement est agencée pour sélectionner le module logiciel particulier en fonction d'une combinaison du signal de détection (S_{d}) et du signal de présence (Sₚ).

5. Interface optoélectronique selon l'une des revendications 3 ou 4, dans laquelle le module de détection (40) comprend au moins un détecteur agencé pour détecter un niveau d'énergie d'au moins une fréquence électrique prédéfinie, chaque fréquence électrique prédéfinie étant associée à l'un des protocoles de communication prédéfinis.

6. Interface optoélectronique selon l'une des revendications 3 ou 4, dans laquelle le module de détection est agencé pour réaliser une opération de corrélation entre les signaux cibles, et un ou des signaux de référence associés chacun à l'un des protocoles de communication prédéfinis.

7. Interface optoélectronique selon l'une des revendications précédentes, dans laquelle une courbe de réponse (15 ; 25) du filtre passe-bande (11) comprend, pour chaque longueur d'onde de signal porteur associée à un protocole de communication prédéfini, un maximum local (26a, 26b) couvrant ladite longueur d'onde de signal porteur.

8. Interface optoélectronique selon la revendication 7, dans laquelle la courbe de réponse (15) comprend, entre deux maximums locaux successifs, une portion sensiblement constante (17) ayant une amplitude sensiblement égale à celle des maximums locaux.

9. Interface optoélectronique selon l'une des revendications précédentes, comprenant de plus une source lumineuse (8) agencée pour émettre sur la fibre optique (3) des signaux lumineux sortants (Sₗₛ), un élément de couplage (9) et une lame séparatrice (10) positionnés entre, d'une part, la fibre optique (3), et d'autre part, la source lumineuse (8) et le photorécepteur (12),
la source lumineuse, le photorécepteur, l'élément de couplage, la lame séparatrice et le filtre passe-bande étant intégrés dans un même composant optoélectronique (7).

10. Interface optoélectronique selon l'une des revendications 1 à 8, comprenant de plus une source lumineuse agencée (8) pour émettre sur la fibre optique (3) des signaux lumineux sortants (Sₗₛ), un élément de couplage (9) et une lame séparatrice (10) positionnés entre, d'une part, la fibre optique (3), et d'autre part, la source lumineuse (8) et le photorécepteur (12),
la source lumineuse, le photorécepteur, l'élément de couplage, la lame séparatrice étant intégrés dans un même composant optoélectronique,
l'interface optoélectronique (2) comprenant de plus un réseau de Bragg formant le filtre passe-bande et un isolateur, le réseau de Bragg et l'isolateur étant situés à l'extérieur et en amont dudit composant optoélectronique.

11. Equipement (1) intégrant une interface optoélectronique (2) selon l'une des revendications précédentes.

12. Equipement selon la revendication 11, l'équipement étant une passerelle Internet (1) agencée pour être reliée à un réseau PON (4).

13. Procédé de configuration, mis en œuvre dans une unité de traitement (6) d'une interface optoélectronique (2) selon l'une des revendications 1 à 10, et comprenant les étapes d'acquérir les signaux électriques entrants (Sₑₑ), de sélectionner un module logiciel particulier (33p) associé au protocole de communication particulier, parmi une pluralité de modules logiciels différents associés chacun à l'un des protocoles de communication prédéfinis, et d'interpréter les signaux électriques entrants en utilisant ledit module logiciel particulier.

14. Programme d'ordinateur comprenant des instructions qui conduisent l'unité de traitement (6) de l'interface optoélectronique (2) selon l'une des revendications 1 à 10 à exécuter les étapes du procédé de configuration selon la revendication 13.

15. Support d'enregistrement lisible par ordinateur, sur lequel est enregistré le programme d'ordinateur selon la revendication 14.
